# EUROPEAN PATENT APPLICATION

(11) **EP 2 381 693 A1**
(43) Date of publication of application: **26.10.2011**
(21) Application number: 10831372.7
(22) Date of filing: 29.07.2010
(51) Int. Cl.: H04N 13/04, G06T 7/20, G09G 5/36, H04N 7/01

(54) **THREE-DIMENSIONAL IMAGE DISPLAY DEVICE AND METHOD OF DERIVING MOTION VECTOR**

(30) Priority: 18.11.2009 JP 2009263206
(71) Applicant: Victor Company Of Japan, Limited, Kanagawa-ku Yokohama-shi Kanagawa 221-8528 (JP)
(72) Inventor: NOGUCHI Hiroshi, Yokohama-shi Kanagawa 221-8528 (JP)
(74) Representative: Wimmer, Hubert
(86) International application number: PCT/JP2010/062762
(87) International publication number: WO 2011/061973

(57) **Abstract**

A motion vector is derived with high accuracy while avoiding deriving of an erroneous motion. A stereoscopic image display device 100 includes an image acquisition unit 148 for acquiring stereoscopic image data and a vector deriving unit 158 that derives correlation values representing correlation strength between each reference-part image data constituting image data in segmented areas of an arbitrary first frame 204 of the stereoscopic image data and objective-part image data being image data in segmented areas of a second frame 206 different from the first frame and that extracts the objective-part image data having the highest correlation value to the reference-part image data to derive the motion vector, with respect to each reference-part image data. The vector deriving unit derives the correlation values between the reference-part image data and the objective-part image data, both of which belong to the right-eye image data 202b, or the correlation values between the reference-part image data and the objective-part image data, both of which belong to the left-eye image data 202a (Fig. 1).

## Description

### TECHNICAL FIELD

The present invention relates to a stereoscopic image display device for deriving a motion vector from stereoscopic image data for allowing a stereoscopic image to be perceived due to binocular parallax and a method of deriving such a motion vector.

### BACKGROUND OF ART

In recent years, there is widely-used a stereoscopic image display device that has a function of deriving a motion vector representing a moving direction of an object and its moving magnitude between a plurality of flames being individual still images constituting motion pictures by means of block matching etc., thereby producing frames to interpolate time series variation between frames.

As for not only frames imaged by one imaging device but also frames imaged by a plurality of imaging devices, there is also proposed an interpolation technique of deriving a moving vector representing the displacement of an object in frames between equal-time frames thereby estimating frames that could be imaged at positions where any imaging device is not arranged (e.g. Patent Document No. 1).

**Patent Document No. 1:**
   Japanese Patent Publication Laid-open: No. H10-13860

### SUMMARY OF THE INVENTION

### TECHNICAL PROBLEM

Meanwhile, a technique of recording and transmitting the stereoscopic image data (image data for left eye and image data for right eye), for allowing a stereoscopic image to be perceived due to binocular parallax, by side-by-side method, top-and-bottom method, etc. is about to be become widespread. Assume that an interframe interpolation technique is adopted to apply an interpolation on the stereoscopic image data recorded by such 3-dimensional recording methods. Then, as a result of comparing partial image data contained in the "left-eye" image data for left eye of one frame of two objective frames with partial image data contained in the "right-eye" image data for right eye on the other frame, there may be caused a deriving of an erroneous motion vector straddling the image data for left eye and the image data for right eye. It is noted that an interpolation frame produced on the ground of such an erroneous motion vector may be at the root of noise.

Therefore, an object of the present invention is to provide a stereoscopic image display device capable of avoiding the derivation of the erroneous motion vector, thereby deriving a motion vector with high accuracy and a method of deriving such a motion vector.

### SOLUTION TO PROBLEM

In order to solve the above-mentioned problems, a stereoscopic image display device of the present invention comprises: an image acquisition unit configured to acquire stereoscopic image data composed of a combination of "left-eye" image data and "right-eye" image data for allowing a stereoscopic image to be perceived due to binocular parallax; and a vector deriving unit configured to: respectively derive correlation values representing correlation strength between each reference-part image data, which constitutes image data in segmented areas of an arbitrary first frame of the stereoscopic image data, and a plurality of objective-part image data, which constitute image data in segmented areas of a second frame different from the first frame of the stereoscopic image data and which are comparative objects to be compared with the each reference-part image data; and extract, for each reference-part image data, the objective-part image data having the highest correlation value to the reference-part image data, thereby deriving a motion vector between the reference-part image data and the extracted objective-part image data, wherein the vector deriving unit is configured to derive either the correlation values between the reference-part image data and the objective-part image data, both of which belong to the "right-eye" image data, or the correlation values between the reference-part image data and the objective-part image data, both of which belong to the "left-eye" image data.

The image acquisition unit may further include a left-right judgment unit configured to: judge whether unit image data, which is obtained by compartmentalizing the stereoscopic image data every predetermined pixels, is belonging to the "left-eye" image data or the "right-eye" image data, based on synchronous signals inputted together with the stereoscopic image data; and affix image information representing whether the unit image data is belonging to either the "left-eye" image data or the "right-eye" image data, with respect to each unit image data.

To predetermined unit image data constituting the stereoscopic image data, there may be affixed image information representing whether the unit image data is belonging to either the "left-eye" image data or the "right-eye" image data, and the vector deriving unit may be configured to judge whether the unit image data is belonging to either the "left-eye" image data or the "right-eye" image data, based on the image information.

In order to solve the above-mentioned problems, a method of deriving a motion vector, comprises the steps of: acquiring stereoscopic image data composed of a combination of "left-eye" image data and "right-eye" image data for allowing a stereoscopic image to be perceived due to binocular parallax; respectively deriving correlation values representing correlation strength between each reference-part image data, which constitutes image data in segmented areas of an arbitrary first frame of the stereoscopic image data, and a plurality of objective-part image data, which constitute image data in segmented areas of a second frame different from the first frame of the stereoscopic image data and which are comparative objects to be compared with the each reference-part image data; and extracting, for each reference-part image data, the objective-part image data having the highest correlation value to the reference-part image data, thereby deriving a motion vector between the reference-part image data and the extracted objective-part image data.

The above method may further include the steps of: judging whether unit image data, which is obtained by compartmentalizing the stereoscopic image data every predetermined pixels, is belonging to the "left-eye" image data or the "right-eye" image data, based on synchronous signals inputted together with the stereoscopic image data; and affixing image information representing whether the unit image data is belonging to either the "left-eye" image data or the "right-eye" image data, with respect to each unit image data.

To predetermined unit image data constituting the stereoscopic image data, there may be affixed image information representing whether the unit image data is belonging to either the "left-eye" image data or the "right-eye" image data, and the method may further include the step of judging whether the unit image data is belonging to either the "left-eye" image data or the "right-eye" image data, based on the image information.

### ADVANTAGEOUS EFFECTS OF THE INVENTION

As mentioned above, the present invention enables a motion vector to be derived with high accuracy by avoiding the derivation of an erroneous motion vector.

### BRIEF DESCRIPTION OF DRAWINGS

[Fig. 1] Fig. 1 is a functional block diagram showing the schematic constitution of a stereoscopic image display device.
[Fig. 2] Fig. 2 is an explanatory view showing one example of stereoscopic image data.
[Fig. 3] Fig. 3 is an explanatory view showing one example of an interpolation frame.
[Fig. 4] Fig. 4 is an explanatory view to explain an interpolation frame based on an erroneous motion vector.
[Fig. 5] Fig. 5 is an explanatory view to explain reference-part image data and objective-part image data.
[Fig. 6] Fig. 6 is an explanatory view to explain the other relationship between the reference-part image data and the objective-part image data.
[Fig. 7] Fig. 7 is a flow chart showing the process flow of a method of deriving a motion vector.

### DESCRIPTION OF SIGNS

- 100: stereoscopic image display device
- 148: image acquisition unit
- 154: left-right judgment unit
- 156: frame memory
- 158: vector deriving unit
- 160: interpolation generating unit
- 202a: image data for left eye
- 202b: image data for right eye
- 204: first frame
- 206: second frame
- 208: interpolation frame

### DESCRIPTION OF EMBODIMENTS

Preferred embodiments of the present invention will be described below in detail with reference to drawings. In these embodiments, illustrated dimensions, materials, other concrete numerals, etc. are nothing but exemplifications for facilitating understanding of the invention and are not directed to limit the scope of the invention if not otherwise specified. Note that, throughout this specification and the drawings, elements substantially identical to those in terms of their function and constitution are indicated with the same reference numerals in view of avoiding a redundant description and also elements unrelated to the essentials of the present invention directly are not illustrated in the drawings.

### (Stereoscopic Image Display Device 100)

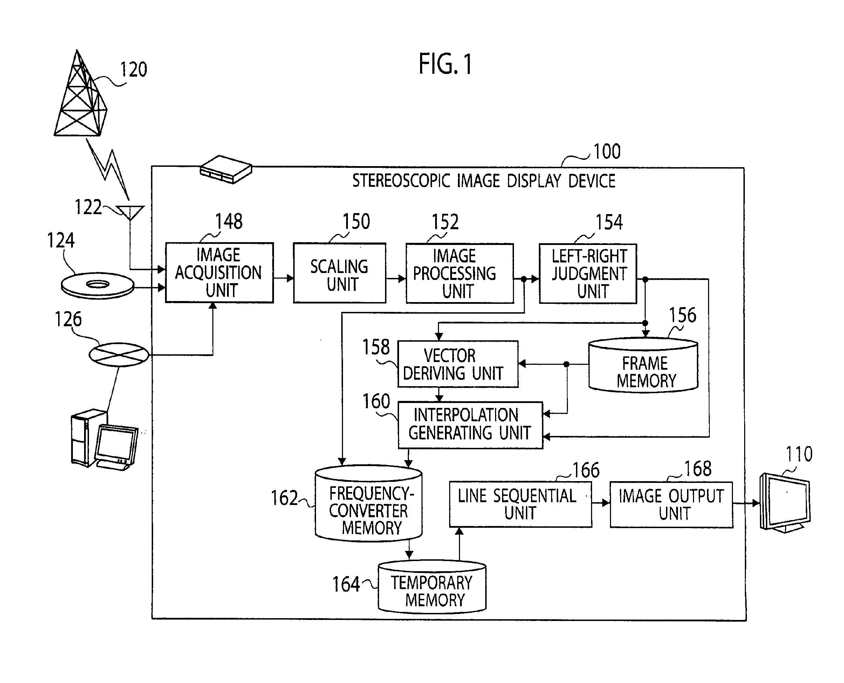

Fig. 1 is a functional block diagram showing the schematic function of a stereoscopic image display device 100. As shown in Fig. 1, the stereoscopic image display device 100 is connected to a display 110 and includes an image acquisition unit 148, a scaling unit 150, an image processing unit 152, a left-right judgment unit 154, a frame memory 156, a vector deriving unit 158, an interpolation generating unit 160, a frequency-converter memory 162, a temporary memory 164, a line sequential unit 166 and an image output unit 168. Although the display 100 is separated from the stereoscopic image display device 100 in this embodiment, they may be formed in one body integrally.

The image acquisition unit 148 acquires stereoscopic image data, which has been transmitted from an outside broadcast station 120 and which comprises a combination of "left-eye" image data and "right-eye" image data for right eye to allow a stereoscopic image to be perceived due to binocular parallax, via an antenna 122. Alternatively, the image acquisition unit 148 may acquire the stereoscopic image data through a recording medium 124, such as DVD and Blu-ray disc, or a communication network (e.g. internet, LAN) 126. In addition, the image acquisition unit 148 of this embodiment also acquires synchronous signals outputted together with the stereoscopic image data (in synchronism with the stereoscopic image data). Note that the image acquisition unit 148 may acquire the synchronous signals outputted from an output source independent of that of the stereoscopic image data.

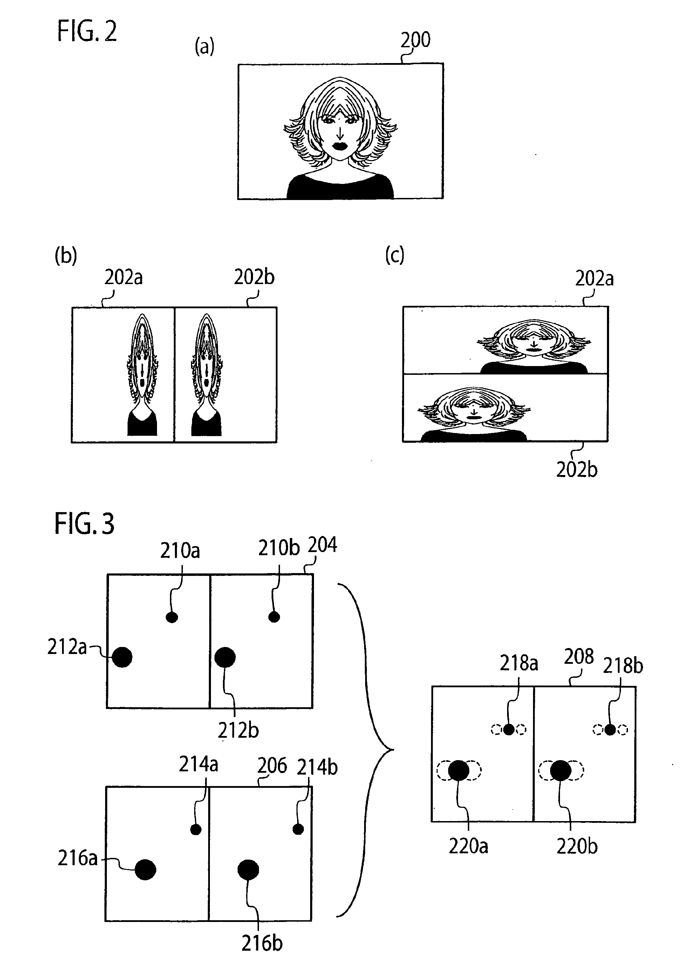

Fig. 2 is an explanatory view showing one example of the stereoscopic image data. There is a plurality of formats in the stereoscopic image data that the image acquisition unit 148 can acquire, and there is a case that individual formats are different from each other in terms of parameter, such as number of pixels. Fig. 2(a) represents image data 200 imaged by a single imaging device, while Figs. 2(b) and 2(c) represent image data imaged by two imaging devices (This image data will be simply referred to as "stereoscopic image data", hereinafter.). Such a stereoscopic image data is obtained by arranging two image data (i.e. image data 202a for left eye and image data 202b for right eye) having different imaging directions (parallax difference) into a single image data.

As for the recording method for stereoscopic image data, there are available: Side-by-Side method shown in Fig. 2(b) where the "left-eye" image data 202a allowing for visibility by a viewer's left eye is arranged in the left side of effective image data while the "right-eye" image data 202b allowing for visibility by a viewer's right eye is arranged in the right side of the effective image data; and Top-and-Bottom method shown in Fig. 2(c) where the "left-eye" image data 202a for visibility by a viewer's left eye is arranged in the upper side of the effective image data while the "right-eye" image data 202b allowing for visibility by a viewer's right eye is arranged in the lower side of the effective image data.

Note that the effective image data means image data obtained by excluding a nondisplay area (blank period) from the whole stereoscopic image data. In the Side-by-Side method, there is also available stereoscopic image data where the "right-eye" image data 202b allowing for visibility by a viewer's right eye is arranged in the left side of the effective image data while the "left-eye" image data 202a for visibility by a viewer's left eye is arranged in the right side of the effective image data. Also in the Top-and-Bottom method, there is also available stereoscopic image data where the "right-eye" image data 202b allowing for visibility by a viewer's right eye is arranged in the upper side of the effective image data while the "left-eye" image data 202a for visibility by a viewer's left eye is arranged in the lower side of the effective image data.

In the stereoscopic image data by the Side-by-Side method, however, it is noted that although each of the "left-eye" image data 202a and the "right-eye" image data 202b has a vertical resolution equal to that of the image data displayed on the display 110, each horizontal resolution is compressed to one-half of that of the image data. Thus, if the number of pixel data as "pixel-scale" data of the effective image data in full-screen is represented by 1920 × 1080, then the numbers of pixels of the "left-eye" image data 202a and the "right-eye" image data 202b become 960 × 1080, respectively. Similarly, in the stereoscopic image data by the Top-and-Down method, it is noted that although each of the "left-eye" image data 202a and the "right-eye" image data 202b has a horizontal resolution equal to that of the image data displayed on the display 110, each vertical resolution is compressed to one-half of that of the image data. Thus, if the number of pixels of the effective image data in full-screen is represented by 1920 × 1080, then the numbers of pixels of the "left-eye" image data 202a and the "right-eye" image data 202b become 1920 × 540, respectively.

In order to display the stereoscopic image data on a display surface of the display 110, there is adopted, for example, line sequential method where horizontal-line image data of the "left-eye" image data 202a and horizontal-line image data of the "right-eye" image data 202b are arranged every line alternately. Further, the subject included in the stereoscopic image data can be stereoscopically displayed in either cross viewing (cross method) or parallel viewing (parallel method) and also, by relatively shifting the horizontal position of the subject included in the "left-eye" image data 202a and the horizontal position of the subject included in the "right-eye" image data 202b to each other right and left, it is possible to form an image of the subject in any position of the backside of the display surface, on the display surface and the front side of the display surface. Note that the line sequential method means a method by which a stereoscopic image can be recognized due to binocular parallax since an observer uses polarized glasses to watch a "left-eye" image on alternating lines through a left eye and a "right-eye" image on alternating lines through a right eye.

Hereinafter, the stereoscopic image display device 100 will be described while taking an example of adopting the Side-by-Side method as the recording procedure of the stereoscopic image data and the line sequential method as the displaying procedure. Not limited to this, however, there may be adopted the Top-and-Bottom method as the recording procedure and the frame sequential method as the displaying procedure. Note that the frame sequential method means a method by which a stereoscopic image can be recognized since an observer watches a "left-eye" frame and a "right-eye" frame through an active shutter (electronic shutter) alternately.

Alternatively, the line sequential method may be used as the recording procedure of the stereoscopic image data. In this case, the stereoscopic image data of two lines is collectively recorded into one line memory whose capacity is twice as much as the amount of information included in a single line of the stereoscopic image data in the horizontal direction. By this process, upon converting the stereoscopic image data to a similar format to that recorded by the Side-by-Side method, it is possible to derive a motion vector mentioned later.

Also, if either "vertical-line" alternative display method where the "left-eye" image data 202a and the "right-eye" image data 202b are arranged with respect to each line alternately or checker board method where the "left-eye" image data 202a and the "right-eye" image data 202b are arranged in a checkered pattern is adopted as the recording procedure, then a later-mentioned motion vector can be derived by acquiring the stereoscopic image data at the image acquisition unit 148 and subsequently rearranging the same data to the Side-by-Side method or the Top-and-Bottom method, as well. Still further, if adopting the frame sequential method as the recording procedure, it may be performed to reduce the cycle of vertical synchronous signals used in the device to half thereby doubling the frame frequency. Such a doubling of the frame frequency allows the stereoscopic image data to be captured in one frame where the "left-eye" image data 202a and the "right-eye" image data 202b are arranged up and down through a blanking area, thereby accomplishing the above task.

The scaling unit 150 adjusts the size of stereoscopic image data to make the stereoscopic image data acquired by the image acquisition unit 148 accord with the display size of the display 110.

The image processing unit 152 applies video signal processing, such as RGB processing (γ-correction, color correction), enhance processing and noise reduction processing, to the stereoscopic image data adjusted by the scaling unit 150. The image processing unit 152 outputs the processed stereoscopic image data to the left-right judgment unit 154 and the frequency-converter memory 162 respectively.

The left-right judgment unit 154 judges whether predetermined unit image data constituting the stereoscopic image data is belonging to the "left-eye" image data or the "right-eye" image data, based on synchronous signals inputted together with the stereoscopic image data. Note here that, as the synchronous signals acquired by the image acquisition unit 148 are transmitted through the scaling unit 150 and the image processing unit 152, these signals will be delayed for a time period that the scaling unit 150 and the image processing unit 152 require for processing them. Then, with respect to each unit image data, the left-right judgment unit 154 affixes image information representing whether the unit image data is belonging to the "left-eye" image data or the "right-eye" image data and further outputs the unit image data to the frame memory 156 and the vector deriving unit 158, respectively. The unit image data and the image information will be described in detail, later.

The frame memory 156 comprises recording media, for example, RAM (Random Access Memory), nonvolatile RAM, flash memory, etc. and retains the stereoscopic image data outputted from the left-right judgment unit 154, e.g. one frame of data, temporally.

The vector deriving unit 158 compares reference-part image data as the base for comparison, which comprise respective image data positioned in segmented areas of an arbitrary frame (This frame will be referred to as "first frame", later.) of the stereoscopic image data outputted from the left-right judgment unit 154, with a plurality of objective-part image data as the comparative objects, which comprise respective image data positioned in segmented areas of a frame temporally succeeding to the first frame and retained in the frame memory 156 (This frame will be referred to as "second frame" later.) of the stereoscopic image data outputted from the left-right judgment unit 154, respectively and derives correlation values representing respective correlation strength between the reference-part image data and the objective-part image data. Note that the vector deriving unit 158 performs a comparison between two successive frames in this embodiment. However, as respective times of the first frame and the second frame have only to differ from each other, the same unit may perform a comparison between two discontinuous frames.

For each reference-part image data, subsequently, the vector deriving unit 158 extracts the objective-part image data having the highest correlation value to the reference-part image data. Then, based on the position of one image represented by the reference-part image data in the first frame and the position of another image represented by the extracted objective-part image data in the second frame, the same unit 158 derives a motion vector between the reference-part image data and the extracted objective-part image data.

Based on the motion vector derived by the vector deriving unit 158, the first frame outputted from the left-right judgment unit 154 and the second frame retained in the frame memory 156, the interpolation generating unit 160 generates an interpolation frame for interpolating between the first frame and the second frame and also outputs the interpolation frame to the frequency-converter memory 162. This interpolation frame will be described with reference to Fig. 3.

Fig. 3 is an explanatory view showing an example of the interpolation frame. An illustration of Fig. 3 represents an interpolation frame generated in converting the frame frequency double. Assume that, for instance, there are two successive frames (also including a case of interposing one or more frames) as shown with a first frame 204 and a second frame 206 of Fig. 3. In such a situation, if respective subjects 210a, 210b, 212a, 212b in the first frame 204 move to positions of respective subjects 214a, 214b, 216a, 216b in the second frame 206, then the interpolation frame is formed by a frame including respective subjects 218a, 218b, 220a, 220b representing respective positions on the way of the above movement. Hereat, each of subjects 210, 212, 214, 216, 218, 220 can be imaged owing to parallax difference between two images of one image for left eye (suffix by "a") and another image for right eye (suffix by "b") stereoscopically. Although this embodiment presumes the first frame 204 as a frame acquired in advance temporally and the second frame 206 as a frame acquired behind the former frame temporally, the second frame 206 may be configured as the temporally-acquired frame in advance while configuring the first frame 204 as the subsequently-acquired frame.

Note that as the frame frequency is doubled in conversion in this embodiment, the subjects in the interpolation frame 208 are displaced from the subjects in the first frame 204 by halves of distances between respective positions of the subjects in the first frame 204 and respective positions of the subjects in the second frame. Accordingly, if it is required to magnify the frame frequency by n-th, there are produced (n-1) pieces of interpolation frames 208, which are displaced from the position of the first frame 204, every distance of 1/n of intervals from the positions of the subjects in the first frame 204 to the positions of the subjects in the second frame 206.

By interposing the interpolation frames 208 between the first frame 204 and the second frame 206 without changing a time interval therebetween, the frame frequency is enhanced to allow the motion of subjects to be recognized smoothly.

However, as the above-mentioned stereoscopic image data does not comprise respective frames of image data imaged by a single imaging device but frames of image data as a result of imaging an identical subject at different points of view, there is a possibility of specific erroneous displaying caused by an erroneous motion vector.

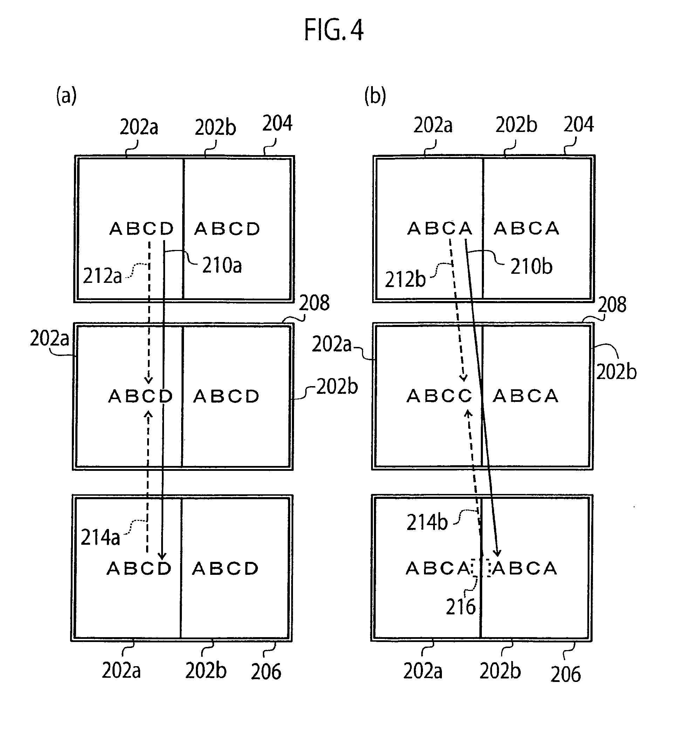

Fig. 4 is an explanatory view to explain an interpolation frame based on the erroneous motion vector. Assume that alphabetical character strings "ABCD" as the subject are respectively included in the first frame 204 and the second frame 206 as shown in Fig. 4(a), while alphabetical character strings "ABCA" as the subject are respectively included in the first frame 204 and the second frame 206 as shown in Fig. 4(b). For ease of comprehension, it is supposed that there was no displacement of the subject between the first frame 204 and the second frame 206.

In case of Fig. 4(a), the vector deriving unit 158 derives a motion vector 210a on correct identification of the position of the alphabetical character string "ABCD" in segmented areas each having a predetermined size in the first frame 204, and the interpolation generating unit 160 generates an appropriate interpolation frame 208 based on the resulting motion vector 210a with use of the reference-part image data of the first frame 204 and the objective-part image data of the second frame 206, as shown with dashed arrows 212a, 214a of Fig. 4(a).

Meanwhile in case of Fig. 4(b), as the alphabetical character string "ABCA" in segmented areas each having a predetermined size in the first frame 204 has the same character "A" arranged on both sides of the string, the vector deriving unit 158 derives an erroneous motion vector 210b on faulty judgment that, for example, the subject "A" in the left-eye image data 202a of the first frame 204 has moved to the subject "A" in the right-eye image data 202b of the second frame 206. Then, as shown in dashed arrows 212b, 214b of Fig. 4(b), the interpolation generating unit 160 may generate an interpolation frame 208 based on the resulting motion vector 210b, the subject "C" in the left-eye image data 202a of the first frame 204 and also a subject 216 shown with dashed line of Fig. 4(b) and straddling both the left-eye image data 202a and the right-eye image data 202b of the second frame 206. If such an interpolation frame 208 is reproduced, then the position of the character string changes between the first frame 204 and the second frame 206 inappropriately, causing disturbances of images.

In deriving a motion vector, therefore, the vector deriving unit 158 is adapted so as not to compare the reference-part image data with the objective-part image data while straddling both the left-eye image data and the right-eye image data. Such an operation will be described in detail, below.

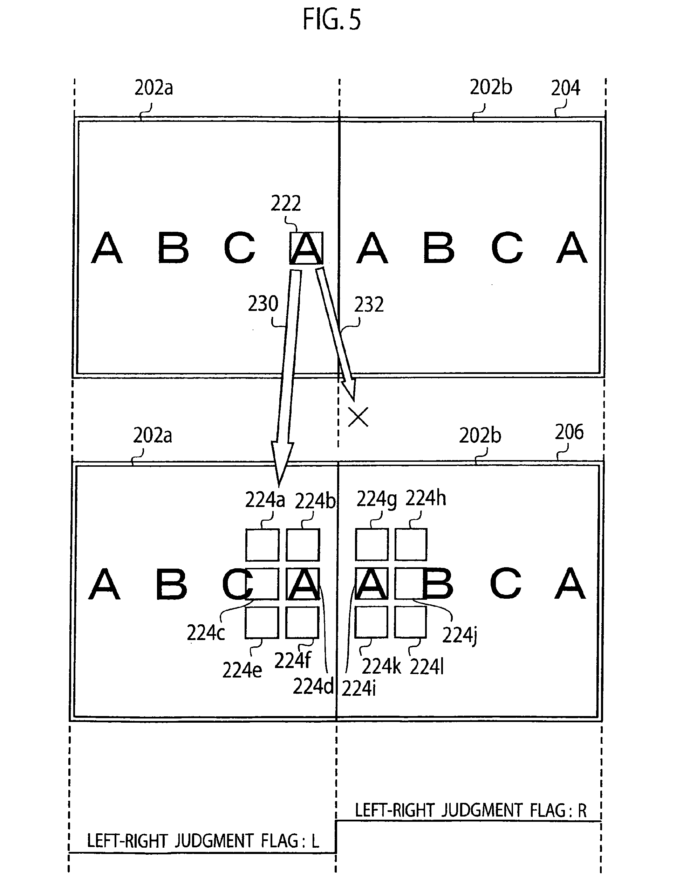

Fig. 5 is an explanatory view to explain the reference-part image data and the objective-part image data. The vector deriving part 158 configures, for instance, respective reference-part image data as effective image data of the first frame 204, which are separated so as not to overlap each other (Fig. 5 illustrates a single reference-part image data 222 as an example.). The reference-part image data is image data constituting the base for comparison in the first frame 204.

In addition, the vector deriving part 158 configures objective-part image data in segmented areas each having a predetermined size in the second frame 206, based on vectors (candidate vectors) nominated for the motion vector. The candidate vectors comprise a plurality of prepared vectors which are established based on a maximum range where a dynamic body occupying the reference-part image data can move in one frame and which represent directions and dimensions from the central coordinate of the reference-part image data of the first frame 204 up to the central coordinate of the objective-part image data of the second frame 206.

Here, the objective-part image data determined corresponding to the candidate vectors are defined in respective positions shifted from the reference-part image data by the candidate vectors, with the same size as the reference-part image data and the number of candidate vectors.

The objective-part image data is part image data as the comparative object in the second frame 206. Based on the candidate vectors, the vector deriving unit 158 configures a plurality of overlapping partial image data as the objective-part image data while shifting pixel data as the basis of candidate vectors one by one, for example. For ease of understanding, this embodiment will be illustrated with an example of objective-part image data 224a~224l non-overlapping each other.

As shown in Fig. 5, for example, if configuring the reference-part image data 222 containing the character "A" in the first frame 204, then the vector deriving unit 158 establishes objective-part image data 224a~224l correspondingly. Further, by comparing a single reference-part image data with a plurality of objective-part image data, the same unit 158 derives correlation values about the luminance value of respective pixel data by e.g. sum of absolute differences (SAD) method. Provided respective pixel data in the same position throughout the reference-part image data and the objective-part image data, namely, between the blocks are defined as "one pair of pixel data", the SAD method represents a technique of integrating a difference absolute value in luminance between the pair of pixel data within the range of block, thereby obtaining an integrated value. In investigating correlativity with use of this integrated value, the correlation value will be maximized when the integrated value becomes a minimum value.

When deriving the correlation values, the vector deriving unit 158 stores an obtained correlation value to the objective-part image data as being related to the candidate vector, in a not-shown working area (memory), with respect to each reference-part image data. Then, the same unit compares a newly-derived correlation value to the other objective-part image data with the stored correlation value. If such a new correlation value is higher than the stored correlation value, then the latter correlation value and its candidate vector are renewed with the new correlation value and its candidate vector. With this constitution, the correlation value stored at the time of completing the deriving of correlation values to the reference-part image data as the base for comparison represents the highest correlation value to the reference-part image data as the base for comparison. Then, the vector deriving unit 158 defines a candidate vector related to the highest correlation value as the motion vector about the reference-part image data as the base for comparison in the first frame 204.

However, if the reference-part image data 222 is compared with the objective-part image data 224i similar to the reference-part image data 222, then the correlation value is enhanced since the respective image data (the reference-part image data 222, the objective-part image data 224i) contain the character "A" commonly, so that the interpolation frame 208 may be produced based on an erroneous motion vector representing that the reference-part image data 222 has moved to the objective-part image data 224i, as described with Fig. 4(b).

Therefore, according to this embodiment, the vector deriving unit 158 derives a correlation value with use of image information (flag) representing whether the reference-part image data 222 and the objective-part image data 224 are parts of the left-eye image data 202a or parts of the right-eye image data 202b, in other words, whether these data are belonging to the "left-eye" image data 202a or the "right-eye" image data 202b. Note that this image information comprises information that the left-right judgment unit 154 has affixed to respective unit image data, based on the synchronous signal acquired with the stereoscopic image data by the image acquisition unit 148.

Specifically, the left-right judgment unit 154 includes a horizontal dot counter reset by a horizontal synchronous signal contained in the synchronous signal. In the horizontal dot counter, its count value is represented by "hcnt". In this case, the left-right judgment unit 154 affixes image information "L" representing the left-eye image data 202a to unit image data that reaches up to a value at the boundary position between the "left-eye" image data 202a and the "right-eye" image data 202b and also affixes image information "R" representing the right-eye image data 202b to the remaining unit image data. Here, since the value at the boundary position varies independently of the width of a blank outside an effective range of the stereoscopic image data and between the right edge of the left-eye image data 202a and the left edge of the right-eye image data 202b, the value at the boundary position is arbitrarily established corresponding to the stereoscopic image data. For instance, the image information comprises one bit of information where "0" and "1" designate "L" and "R", respectively. Then, when counting up the total pixels in one line, the left-right judgment unit 154 resets the count value "hcnt" based on the next horizontal synchronous signal. Note that the unit image data designates image data compartmentalized in units of a predetermined number of pixels. In addition, by making the size of unit image data equal to each size of the reference-part image data and the objective-part image data, it is possible to reduce the computing load on the device.

Alternatively, when the image acquisition unit 148 acquires the stereoscopic image data recorded with use of the Top-and-Bottom method, the left-right judgment unit 154 may have a vertical line counter reset by a vertical synchronous signal contained in the synchronous signal. In the vertical line counter, its count value is represented by "vcnt". In this case, the left-right judgment unit 154 affixes image information "L" representing the left-eye image data 202a to unit image data that reaches up to a value at the boundary position between the "left-eye" image data 202a and the "right-eye" image data 202b and also affixes image information "R" representing the right-eye image data 202b to the remaining unit image data. Here, since the value at the boundary position varies independently of the width of a blank outside the ineffective range of the stereoscopic image data, the value at the boundary position is arbitrarily established corresponding to the stereoscopic image data. Also in this case, the image information comprises one bit of information where "0" and "1" designate "L" and "R", respectively. Then, when counting up the total pixels in one line, the left-right judgment unit 154 resets the count value "vent" based on the next vertical synchronous signal.

As the left-right judgment unit 154 utilizes the synchronous signals included in the existing image system (e.g. television broadcasting) in the judgment between the "left-eye" image data 202a and the "right-eye" image data 202b, it is possible to derive the motion vector with high accuracy, without producing much improvement in the image system.

Alternatively, when the image acquisition unit 148 acquires the stereoscopic image data from the recording media 124 or the communication network 126, there is no need of activating the left-right judgment unit 154, provided each predetermined unit image data (e.g. specified quantity of pixel data) constituting the stereoscopic image data is provided with the image information representing whether the unit image data is belonging to the "left-eye" image data 202a or the "right-eye" image data 202b. In this case, the vector deriving unit 158 may judge whether the unit image data is a part of the "left-eye" image data 202a or a part of the "right-eye" image data 202b, in other words, whether the unit image data is belonging to the "left-eye" image data 202a or the "right-eye" image data 202b, based on the image information. Thus, with use of the image information affixed in advance, the stereoscopic image display device 100 can determine whether the unit image data is a part of the "left-eye" image data 202a or a part of the "right-eye" image data 202b, precisely.

Based on the image information, the vector deriving unit 158 judges whether each of the reference-part image data and the objective-part image data is belonging to the "left-eye" image data 202a or the "right-eye" image data 202b. For instance, if the image information about e.g. all pixel data contained in the reference-part image data or the objective-part image data is "L", it is judged that the relevant data belongs to the "left-eye" image data 202a. Conversely, if the image information is "R", it is judged that the relevant data belongs to the "right-eye" image data 202b.

Then, the vector deriving unit 158 derives correlation values between the "right-eye" image data 202b of the reference-part image data 222 and the "right-eye" image data 202b of the objective-part image data 224a~224l. Alternatively, the same unit 158 derives correlation values between the "left-eye" image data 202a of the reference-part image data 222 and the "left-eye" image data 202b of the objective-part image data.

Therefore, as shown with arrows 230, 232 of Fig. 5, the vector deriving unit 158 compares the objective-part image data 224a~224f contained in the "left-eye" image data 202a with the reference-part image data 222 and does not compare the objective-part image data 224g~2241 contained in the "right-eye" image data 202b with the reference-part image data 222 of the "left-eye" image data 202a (shown with "x"). In connection, the vector deriving unit 158 may be restricted so as not to configure the objective-part image data 224g~2241 having the image information of "R" from the beginning or not to select the objective-part image data 224g~224l having the image information of "R" out of the objective-part image data 224a~224l, as comparative objects.

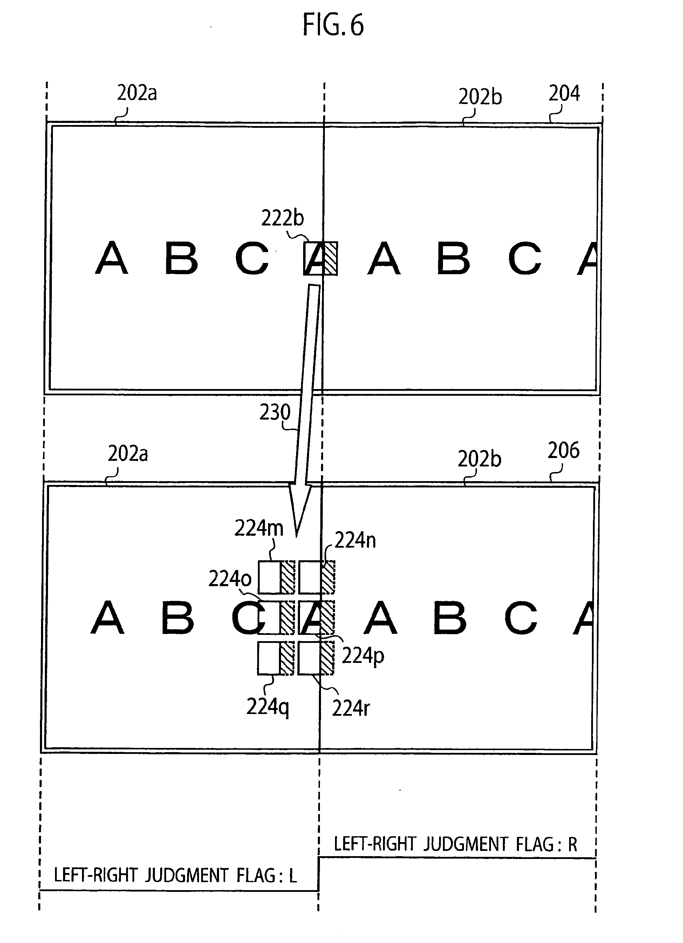

Fig. 6 is an explanatory view to explain another relationship between the reference-part image data and the objective-part image data. As shown in Fig. 6, if a part of the reference-part image data 222 and its remaining part are respectively included in the "left-eye" image data 202a and the "right-eye" image data 202b, in other words, when the reference-part image data 222 comprises both pixel data with the image information "R" remaining part and pixel data with the image information "L", the vector deriving unit 158 limits the reference-part image data to a data portion included in either the "left-eye" image data 202a or the "right-eye" image data 202b. For instance, in case of Fig. 6, the reference-part image data is limited to a data portion that would be contained in an area where a block's central pixel exits if displaying the reference-part image data, so that the region of the reference-part image data is reduced from a square shape to a rectangular shape. That is, the vector deriving unit 158 renews the previous reference-part image data to reference-part image data 222b which belongs to only either of the "right-eye" image data or the "left-eye" image data and removes a hatching area.

Then, the vector deriving unit 158 also configures the region of the objective-part image data (e.g. 224m~224r) in accordance with the region of the reference-part image data 222b.

Also in the case of Fig. 6, the vector deriving unit 158 performs a comparison of the reference-part image data 222b of the first frame 204 with the objective-part image data 224m~224r of the second frame 206 under condition that the comparison data is limited to the "left-eye" image data 202a. Therefore, the vector deriving unit 158 can derive a motion vector with high accuracy as a result of avoiding a deriving of an erroneous motion vector.

Hereat, as the vector deriving unit 158 does not derive an erroneous motion vector, there is no possibility that the interpolation generating unit 160 generates an interpolation frame based on the erroneous motion vector. In addition, as the stereoscopic image display device 100 allows the display 110 to display the stereoscopic image data subjected to interpolation between the frames, it is possible to make a viewer perceive beautiful stereoscopic images cancelling noise.

The frequency-converter memory 162 stores one frame of stereoscopic image data (the first frame 204 or the second frame 206) generated from the image processing unit 152 and the interpolation frame 208 -generated from the interpolation generating unit 160. Then, the frequency-converter memory 162 readouts these stereoscopic image data at double the frame frequency in temporal sequence, and outputs the stereoscopic image data to the temporary memory 164.

The temporary memory 164 is formed by a recording medium, for example, RAM, nonvolatile RAM, flash memory, etc. to temporarily retain the stereoscopic image data after frequency conversion, which was generated from the frequency-converter memory 162 and in which the interpolation frame 208 is inserted.

By controlling the read-write address of the stereoscopic image data retained in the temporary memory 164 and having the interpolation frame inserted therein (This data will be simply referred to as "interpolated stereoscopic image data" below.), the line sequential unit 166 alternately juxtaposes horizontal line image data of the "right-eye" image data 202b and horizontal line image data of the "left-eye" image data 202a both in the interpolated stereoscopic image data to generate line sequential image data and outputs it to the image output unit 168.

However, as the horizontal resolution of the "left-eye" image data 202a of the "right-eye" image data 202b becomes one-half of that of the original stereoscopic image data in the Side-by-Side method, the horizontal resolution has to be doubled. In order to generate new pixel data accompanied with the enlargement of horizontal resolution, it is possible to use linear interpolation or the other filtering. Again, the magnification ratio of horizontal resolution is appropriately adjusted corresponding to the recording method of the stereoscopic image data or the ratio in the number of horizontal pixels of the format of stereoscopic image data at inputting and outputting. Then, with the enlargement of horizontal resolution, the line sequential unit 166 reduces the vertical resolution to half to generate the line sequential image data and further outputs it to the image output unit 168.

The image output unit 168 outputs the line sequential image data generated by the line sequential unit 166, to the exterior display 110.

As mentioned above, the stereoscopic image display device 100 of this embodiment derives a motion vector from only the "left-eye" image data 202a-to-the "left-eye" image data 202a or the "right-eye" image data 202b-to-the "right-eye" image data 202b. Consequently, it is possible to derive a motion vector with high accuracy while avoiding deriving an erroneous motion vector straddling the "left-eye" image data 202a and the "right-eye" image data 202b, allowing the interpolation accuracy between frames and the accuracy of removing film judder to be improved in the speed-up processing of frame frequency, the data compaction and so on.

### (Method of Deriving Motion Vector)

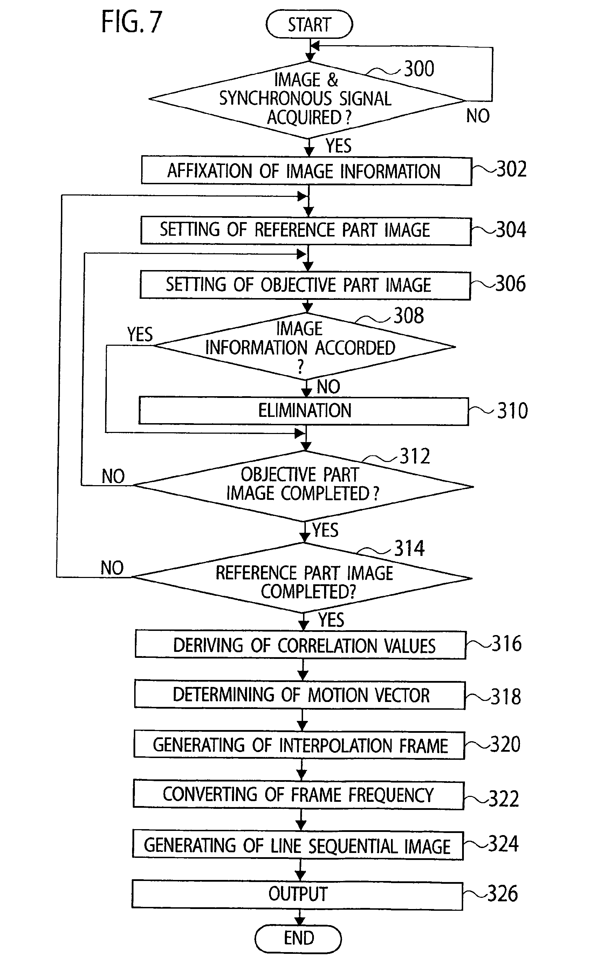

Furthermore, there is provided a method of deriving a motion vector with use of the above-mentioned stereoscopic image display device 100. Fig. 7 is a flow chart showing the process flow in the method of deriving a motion vector.

When the image acquisition unit 148 acquires the stereoscopic image data and the synchronous signals (YES at step S300), the left-right judgment unit 156 judges whether the unit image data of the stereoscopic image data is belonging to either the "left-eye" image data 202a or the "right-eye" image data 202b, based on the synchronous signals acquired at the acquisition step S300 and further affixes the image information with respect to each unit image data (S302).

The vector deriving unit 158 divides the effective image data of the first frame 204 to configure a plurality of reference-part image data (S304) and also configures the objective-part image data determined by the central coordinate of the reference-part image data established in the second frame 206 and the candidate vector (S306).

The vector deriving unit 158 judges whether the reference-part image data and the objective-part image data belong to either the "left-eye" image data or the "right-eye" image data (S308). If both of the image information do not accord with each other (NO at step S308), then the related objective-part image data is eliminated from the comparative objects (S310). Thus, if the reference-part image data constitutes a portion of the "right-eye" image data, then the objective-part image data being a portion of the "left-eye" image data is eliminated from the comparative objects. Conversely, if the reference-part image data constitutes a portion of the "left-eye" image data, then the objective-part image data being a portion of the "right-eye" image data is eliminated from the comparative objects. If both of the image information accord with each other (YES at step S308), then the vector deriving unit 158 does not execute the eliminating step (S310).

Next, the vector deriving unit 158 judges whether the objective-part image setting step (S306) for all the candidate vectors has been completed or not (S312). If the setting step has not been completed (NO at step S312), then the routine returns to the objective-part image setting step (S306) to establish the next objective-part image data.

When the objective-part image setting step (S306) has been already completed for all the candidate vectors (YES at step S312), the vector deriving unit 158 judges whether the reference-part image setting step (S308) where the effective image data is divided to establish the reference-part image data has been completed or not (S314). If not completed (NO at step S314), the routine returns to the reference-part image setting step (S304).

When the reference-part image setting step (S308) has been already completed for all the par image data obtained by dividing the effective image data (YES at step S314), the vector deriving unit 158 compares each of the plurality of reference-part image data of the first frame 204 with the plurality of objective-part image data of the second frame 206 to derive a correlation value representing the correlation strength every the objective-part image data for each reference-part image data. Assume here that the vector deriving unit 158 does not derive the correlation values for the objective-part image data eliminated at the eliminating step (S310).

Then, the vector deriving unit 158 extracts the objective-part image data having the highest correlation value to the reference-part image data, for each reference-part image data and further configures, as the motion vector, a candidate vector related to the extracted objective-part image data (S318). The interpolation generating unit 160 generates the interpolation frame 208 interpolating between the first frame 204 and the second frame 206, based on the motion vector derived by the vector deriving unit 158, the first frame 204 and the second frame 206 (S320).

The frequency-converter memory 162 stores one frame of stereoscopic image data generated from the image processing unit 152 and the interpolation frame 208 generated from the interpolation generating unit 160. Then, the same memory outputs these stereoscopic image data to the temporary memory 164 at double the frame frequency, in temporal sequence (S322). The line sequential unit 166 alternately juxtaposes horizontal line image of the "right-eye" image data 202b and horizontal line image of the "left-eye" image data 202a to generate the line sequential image data (S324). The image output unit 168 outputs the line sequential image data to the exterior display 110 (S326).

As mentioned above, according to the motion-vector deriving method using the stereoscopic image display device 100, since it is possible to avoid a deriving of an erroneous motion vector and derive a motion vector with high accuracy, allowing a viewer to perceive stereoscopic images cancelling noise.

Although the preferred embodiment of the present invention has been described with reference to accompanying drawings hereinabove, it goes without saying that the present invention is not limited to such an embodiment only. As will be understood by the skilled person, various changes and modifications can be made within the scope of claims of the invention and they also belong to the technical scope of the invention as a matter of course.

Note that respective processes in the motion vector deriving method do not have to be executed in an orderly manner shown in the flow chart of this specification. Thus, these processes may be executed in parallel or include processes in subroutine.

### INDUSTRIAL APPLICABILITY

The present invention is available to a stereoscopic image display device that derives a motion vector from stereoscopic image data allowing a viewer to perceive a stereoscopic image due to binocular parallax and a method of deriving such a motion vector.

## Claims

1. A stereoscopic image display device comprising:
an image acquisition unit configured to acquire stereoscopic image data composed of a combination of "left-eye" image data and "right-eye" image data for allowing a stereoscopic image to be perceived due to binocular parallax; and
a vector deriving unit configured to:
respectively derive correlation values representing correlation strength between each reference-part image data, which constitutes image data in segmented areas of an arbitrary first frame of the stereoscopic image data, and a plurality of objective-part image data, which constitute image data in segmented areas of a second frame different from the first frame of the stereoscopic image data and which are comparative objects to be compared with the each reference-part image data; and
extract, for each reference-part image data, the objective-part image data having the highest correlation value to the reference-part image data, thereby deriving a motion vector between the reference-part image data and the extracted objective-part image data, wherein
the vector deriving unit is configured to derive either the correlation values between the reference-part image data and the objective-part image data, both of which belong to the "right-eye" image data, or the correlation values between the reference-part image data and the objective-part image data, both of which belong to the "left-eye" image data.

2. The stereoscopic image display device of claim 1, further comprising a left-right judgment unit configured to:
judge whether unit image data, which is obtained by compartmentalizing the stereoscopic image data every predetermined pixels, is belonging to the "left-eye" image data or the "right-eye" image data, based on synchronous signals inputted together with the stereoscopic image data; and
affix image information representing whether the unit image data is belonging to either the "left-eye" image data or the "right-eye" image data, with respect to each unit image data.

3. The stereoscopic image display device of claim 1 or 2, wherein
predetermined unit image data constituting the stereoscopic image data has image information affixed thereto to represent whether the unit image data is belonging to either the "left-eye" image data or the "right-eye" image data, and
the vector deriving unit is configured to judge whether the unit image data is belonging to either the "left-eye" image data or the "right-eye" image data, based on the image information.

4. A method of deriving a motion vector, comprising the steps of:
acquiring stereoscopic image data composed of a combination of "left-eye" image data and "right-eye" image data for allowing a stereoscopic image to be perceived due to binocular parallax;
respectively deriving correlation values representing correlation strength between each reference-part image data, which constitutes image data in segmented areas of an arbitrary first frame of the stereoscopic image data, and a plurality of objective-part image data, which constitute image data in segmented areas of a second frame different from the first frame of the stereoscopic image data and which are comparative objects to be compared with the each reference-part image data; and
extracting, for each reference-part image data, the objective-part image data having the highest correlation value to the reference-part image data, thereby deriving a motion vector between the reference-part image data and the extracted objective-part image data.

5. The method of deriving a motion vector of claim 4, further comprising the steps of:
judging whether unit image data, which is obtained by compartmentalizing the stereoscopic image data every predetermined pixels, is belonging to the "left-eye" image data or the "right-eye" image data, based on synchronous signals inputted together with the stereoscopic image data; and
affixing image information representing whether the unit image data is belonging to either the "left-eye" image data or the "right-eye" image data, with respect to each unit image data.

6. The method of deriving a motion vector of claim 4 or 5, wherein
predetermined unit image data constituting the stereoscopic image data has image information affixed thereto to represent whether the unit image data is belonging to either the "left-eye" image data or the "right-eye" image data, and
the method further comprises the step of judging whether the unit image data is belonging to either the "left-eye" image data or the "right-eye" image data, based on the image information.
